(19) Europäisches Patentamt
European Patent Office
Office européen des brevets

(11) **EP 1 119 765 B1**

(12) **FASCICULE DE BREVET EUROPEEN**

(45) Date de publication et mention de la délivrance du brevet:
**27.04.2011 Bulletin 2011/17**

(21) Numéro de dépôt: **99946273.2**

(22) Date de dépôt: **01.10.1999**

(51) Int Cl.:
***G01N 27/406*** (2006.01)

(86) Numéro de dépôt international:
**PCT/FR1999/002339**

(87) Numéro de publication internationale:
**WO 2000/020854 (13.04.2000 Gazette 2000/15)**

(54) **PROCEDE DE CONTROLE D'UN CAPTEUR DE GAZ D'ECHAPPEMENT D'UN VEHICULE AUTOMOBILE**

METHODE ZUR KONTROLLE EINES AUTOABGASSENSORS

METHOD FOR CONTROLLING A MOTOR VEHICLE EXHAUST GAS SENSOR

(84) Etats contractants désignés:
**DE ES GB IT**

(30) Priorité: **02.10.1998 FR 9812382**

(43) Date de publication de la demande:
**01.08.2001 Bulletin 2001/31**

(73) Titulaire: **Renault s.a.s.**
**92100 Boulogne Billancourt (FR)**

(72) Inventeurs:
• **AIMARD, Frédéric**
**F-91150 Etampes (FR)**
• **ALBOUY, Hugues**
**F-92000 Nanterre (FR)**
• **COL, Gabriel**
**F-75015 Paris (FR)**
• **DIONNET, Bernard**
**F-91150 Morigny (FR)**
• **NEYRAT, Pierre**
**F-91290 La Norville (FR)**

(74) Mandataire: **Srour, Elie et al**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**DE-A- 19 729 350    US-A- 5 182 907**
**US-A- 5 804 700**

**Description**

La présente invention concerne un procédé de contrôle d'un capteur de gaz d'échappement, de type potentiométrique, d'un véhicule automobile, associé à un pot catalytique dans le but d'assurer la dépollution du moteur.

Les normes européennes de dépollution Euro 2000 et 2005 et de surveillance EOBD 2000 et EOBD 2005 imposent de fortes contraintes sur la dépollution des moteurs à essence et diesel, sur la maîtrise des dispersions et le choix des composants pour le diagnostic. En particulier, pour le diagnostic des catalyseurs à trois voies effectuant des réactions chimiques d'oxydoréduction ou ceux effectuant des réactions d'oxydation pour les moteurs fonctionnant principalement en mélange pauvre en carburant, on utilise des capteurs de gaz, comme par exemple des capteurs HC d'hydrocarbures, que le carburant soit l'essence ou le diesel. La partie sensible de ces capteurs est placée dans le tuyau des gaz d'échappement afin d'être traversée par ces gaz.

Il existe aussi des capteurs $NO_x$ d'oxyde d'azote permettant l'optimisation du fonctionnement des catalyseurs de réduction, de type $DeNO_x$, SCR, piège à $NO_x$, pour les moteurs diesel ou essence et le diagnostic de ces composants chimiques.

Ces capteurs sont de type potentiométrique, constitués d'une part d'au moins une cellule de mesure comprenant deux électrodes, l'une de référence et l'autre de mesure, et un électrolyte, et d'autre part d'un élément de chauffage, comme une résistance de platine, piloté en tension soit continûment soit en rapport cyclique. Chaque cellule de mesure délivre un signal de sortie sous forme d'une tension électrique $V_{out}$ qui est caractéristique de la pression partielle en élément chimique recherché. Ainsi, pour une sonde à oxygène $O_2$ tout ou rien, la tension de sortie est représentative de la pression partielle en oxygène et pour un capteur HC elle est proportionnelle à la pression partielle en hydrocarbures.

Or, un tel capteur de type potentiométrique est généralement sensible à la température et sujet à différentes dérives en cours d'utilisation. Il faut donc surveiller leur état de fonctionnement afin de corriger la dérive, voire d'inhiber les applications en cas de défaillance du capteur, et d'assurer un mode de fonctionnement dégradé garantissant une information de sortie fiable et la moins dispersée possible.

Actuellement, une solution connue au vieillissement des sondes linéaires à oxygène $O_2$ de type ampérométrique est décrite dans le brevet allemand DE 19729350 au nom de DENSO, consistant à mesurer la variation entre la valeur de la puissance de chauffage de l'élément de chauffage nécessaire à un capteur neuf et la valeur constatée pour un capteur en cours de vieillissement, dans des conditions de fonctionnement prédéfinies. La différence entre ces deux valeurs sert à adapter la consigne de régulation de la température de l'élément sensible de la sonde $O_2$ mono-cellule au vieillissement de cette dernière, sans correction de son signal de sortie.

Une autre solution actuelle est décrite dans le brevet américain US 5 182 907 au nom de HONDA, proposant la surveillance du signal de sortie d'un capteur HC par comparaison à un seuil préétabli, dans des conditions de coupure d'injection du carburant dans le moteur.

Cela ne garantit pas l'absence d'hydrocarbure à l'échappement dans les conditions de fonctionnement choisies, donc ne constitue pas une référence fiable puisque subsistent des risques de fortes dispersions ou de fausses détections de pannes du capteur.

La comparaison entre la valeur de la commande de chauffage de la sonde quand elle est à l'état neuf et la valeur de cette commande quand elle est à l'état vieilli impose la définition de conditions de roulage précises, qui dépendent notamment de l'environnement puisque la température d'un capteur dépend à la fois de la température ambiante et de la température des gaz d'échappement.

Cela peut entraîner de fortes dispersions préjudiciables à la fiabilité du capteur. De plus, la variation de la caractéristique du capteur représentant sa résistance interne en fonction de la température ne constitue pas le seul mode de dégradation, puisque les variations de la caractéristique d'un capteur potentiométrique représentant le signal de sortie en fonction de la température en est un autre.

Pour pallier ces inconvénients, l'invention propose un procédé de contrôle d'un capteur de gaz d'échappement, de type potentiométrique, délivrant une ou plusieurs tensions caractéristiques d'une ou plusieurs espèces chimiques à mesurer, et comprenant un dispositif de maintien de la température de l'élément sensible proche d'une ou plusieurs températures nominales, consistant d'une part en une surveillance du capteur à partir du signal de sortie dans des conditions de fonctionnement du moteur déterminées pour engendrer une sensibilité minimale de ce signal de sortie à la température, et d'autre part en une adaptation du dispositif de maintien de la température en fonction du signal de sortie et des conditions de fonctionnement du moteur pour minimiser la sensibilité du capteur à la température.

Pour cela, l'objet de l'invention est un procédé de contrôle d'un capteur de gaz d'échappement d'un véhicule automobile, selon la revendication 1.

D'autres caractéristiques et avantages de l'invention apparaîtront à la lecture de la description d'un procédé de contrôle d'un capteur, illustrée par les figures suivantes qui sont :

- la figure 1 : une vue en coupe transversale d'un capteur de gaz de type potentiométrique ;

- la figure 2 : le signal de sortie d'un capteur de gaz en fonction de la température de la cellule de mesure ;

- les figures $3_a$ et $3_b$ : le schéma électrique d'un capteur de gaz respectivement à tension de chauffage cartographiée et à tension de chauffage modulée ;

- la figure 4 : la caractéristique d'un capteur de gaz représentant la résistance interne en fonction de la température moyenne ;

- la figure 5 : l'adaptation de la variation du signal de sortie d'un capteur de gaz en fonction de la température, dans le procédé selon l'invention ;

- la figure 6 : l'adaptation de la température nominale d'un capteur de gaz dans le procédé selon l'invention ;

- les figures $7_a$ et $7_b$ : le signal de sortie d'un capteur de gaz en réponse à une modulation, dans le temps, de la commande de chauffage.

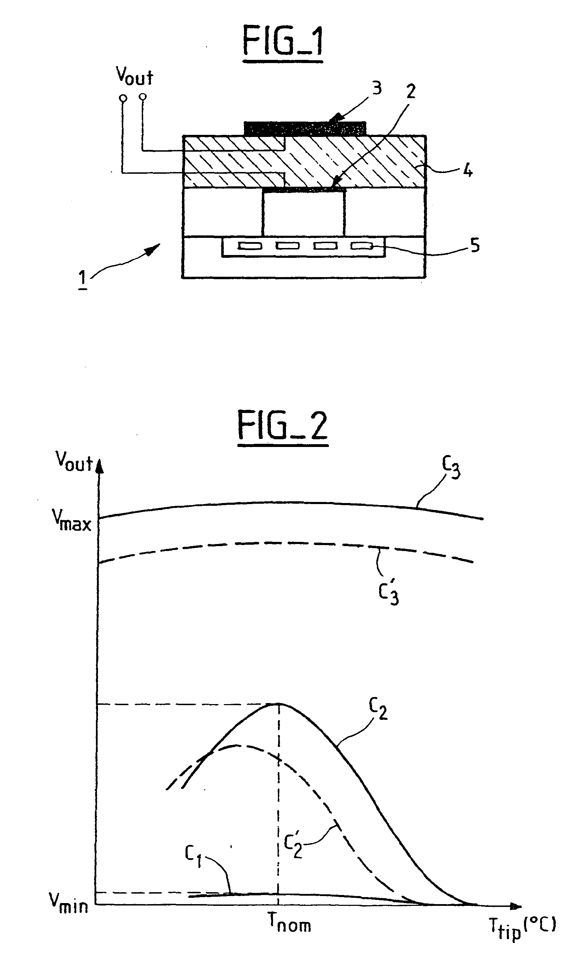

La figure 1 est une vue en coupe transversale d'une cellule 1 de mesure d'un capteur de gaz, de type potentiométrique. Elle est constituée de deux électrodes 2 et 3 disposées de part et d'autre d'un substrat 4 constitué d'une électrolyte solide. Une des électrodes 2 est plongée dans l'air et sert de référence, tandis que l'autre 3 est plongée dans les gaz d'échappement. Un élément de chauffage 5, telle qu'une résistance de platine, élève la température de la cellule de mesure de telle sorte que l'électrolyte solide devient conductrice des ions $O_2$ et qu'une différence de potentiel apparaît entre les deux électrodes. Cette tension électrique $V_{out}$ est fonction de la concentration en hydrocarbures par exemple des gaz d'échappement.

Quel que soit l'élément de chauffage destiné au maintien de la température du capteur, qu'il soit piloté en tension de façon continue ou bien en rapport cyclique, on définit une température $T_{nom}$ telle que la sensibilité du signal de sortie $V_{out}$ du capteur en fonction de la température soit la plus faible possible, afin d'obtenir le minimum de dispersion sur ce signal, la dispersion maximale tolérable étant indépendante des performances du dispositif de maintien de la température.

Sur la figure 2 qui représente le signal de sortie $V_{out}$ d'un capteur en fonction de la température $T_{tip}$ de la cellule de mesure, les trois courbes $C_1$, $C_2$ et $C_3$ en traits pleins donnent la sensibilité du signal de sortie pour trois concentrations différentes de l'espèce chimique à détecter, respectivement nulle, intermédiaire et en saturation. Il y a saturation quand il y a un excès de l'espèce chimique ou d'un autre élément. Par exemple, pour un capteur HC potentiométrique sensible à l'hydrogène, il y a saturation quand la richesse du mélange air-carburant est égale ou supérieure à 1. Dans ce dernier cas, la puissance de chauffage de l'élément de chauffage est déterminée pour assurer une température nominale $T_{nom}$ sur le plateau.

Il existe différents types de dispositif de maintien de la température d'un capteur de gaz, en particulier dont la tension de chauffage $V_{ch}$ est unique quelles que soient les conditions de fonctionnement du moteur. Dans ce cas, en fonction de la température et du débit des gaz d'échappement, la température $T_{nom}$ souhaitée sera plus ou moins obtenue.

Selon un autre type, la tension de chauffage est cartographiée en fonction de plusieurs paramètres de fonctionnement du moteur, comme le débit des gaz, leur température, le régime et la charge du moteur, la température de l'eau de refroidissement du moteur par exemple. La figure $3_a$ est le schéma électrique de l'élément de chauffage 6 de la cellule de mesure, qui reçoit une tension de chauffage $V_{ch}$ à partir d'un dispositif de commande 7 en fonction de la tension de la batterie $V_{bat}$, de la température d'eau $T_{eau}$ du moteur et du débit des gaz d'échappement $Q_{gaz}$. La sensibilité au point de fonctionnement est encore plus faible mais le signal de sortie reste encore sensible aux dispersions entre composants.

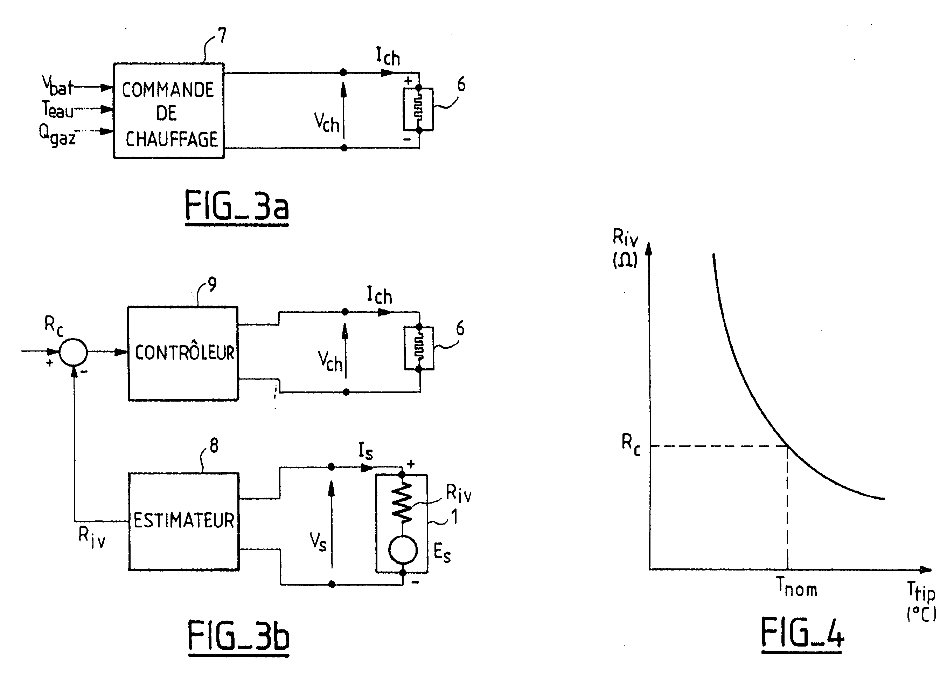

Pour optimiser le fonctionnement d'un capteur vis à vis de la température, on peut évaluer la résistance interne $R_{iv}$ d'une des cellules de mesure 1, de tension $E_s$, par l'application d'une excitation de courant $I_s$ en haute fréquence suivie de l'analyse de la tension de sortie $V_s$ de cette cellule, comme le montre le schéma électrique d'un capteur de gaz, sur la figure $3_b$. La figure 4 est la caractéristique d'une telle cellule en céramique représentant sa résistance interne $R_{iv}$ en fonction de la température moyenne $T_{tip}$, qui est une fonction exponentielle décroissante.

Par un asservissement de cette résistance $R_{iv}$, estimée dans un circuit 8, à une valeur de consigne $R_c$, en modulant la tension de chauffage $V_{ch}$ de l'élément de chauffage 6 par un circuit contrôleur 9, on maîtrise la température moyenne de la cellule $T_{tip}$ autour d'une valeur nominale $T_{nom}$, quelles que soient les conditions de débit et de température des gaz d'échappement à travers le capteur.

Lors de l'utilisation du capteur, plusieurs modes de dégradation peuvent survenir, dus soit au vieillissement du capteur en abaissant sa température nominale $T_{nom}$, soit à des dérives à l'état neuf en raison de la dispersion des composants. Ainsi, la courbe caractéristique du signal de sortie $V_{out}$ en fonction de la température de l'élément sensible $T_{tip}$ peut se décaler vers une plus basse température nominale $T_{nom}$ comme le montre la courbe $C'_2$ de la figure 2, et/ou subit une chute de tension proportionnelle au niveau de concentration en espèce chimique suivant la courbe C'$_3$. De plus, différents types de pannes électriques, tels qu'un court-circuit ou un circuit ouvert, peuvent décaler l'offset du signal, au niveau minimum ou maximum.

Dans le procédé selon l'invention, la puissance délivrée par le dispositif de maintien de la température du capteur de gaz est adaptée aux modes de dégradation du capteur pour garantir des conditions de mesure de son signal de sortie correspondant à la sensibilité minimale en fonction de la température.

Pour cela, le procédé de contrôle comporte une phase de surveillance du signal de sortie délivré par le capteur de gaz pour détecter d'éventuelles dégradations de type chute du signal, en termes de gain ou d'offset, par exemple et pour en tenir compte. Cette prise en compte d'une évolution des mesures délivrées par le capteur peut consister en un signalement d'une panne du composant si la dérive est suffisamment importante, ou bien elle peut être suivie d'une correction du signal de sortie $V_{out}$ recalant le gain et l'offset. Dans le procédé selon l'invention, cette surveillance du signal de sortie est effectuée dans des conditions de fonctionnement du moteur telles que la sensibilité de la tension de sortie $V_{out}$ avec la température est minimale. C'est le cas quand la tension $V_{out}$ est minimale ou maximale.

D'une part, la détection du niveau minimal de tension de sortie du capteur de gaz correspond en général à l'absence de l'espèce chimique recherchée dans les gaz d'échappement (courbe $C_1$ de la figure 2). Pour un capteur HC ou $NO_X$, cette condition se produit quand le moteur est en coupure d'injection et que l'actionneur d'admission d'air dans un moteur à essence, c'est-à-dire la vanne additionnelle ou le papillon motorisé, réalise un dosage en air minimisant les hydrocarbures de l'huile passant dans l'échappement. Pour une sonde à oxygène "tout-ou-rien", le mélange air/ carburant doit être suffisamment pauvre en carburant pour réaliser un excès d'oxygène, soit une différence de potentiel faible entre l'électrode de mesure et l'électrode de référence de la cellule de mesure du capteur.

D'autre part, la détection du niveau maximal de tension correspond en général à un excès de l'espèce chimique dont on mesure la concentration ou d'un autre élément (courbe $C_3$ de la figure 2). Par exemple, pour un capteur d'hydrocarbures HC de type potentiométrique, qui est aussi sensible à l'hydrogène, on obtient la saturation de la tension de sortie $V_{out}$ lorsque le moteur fonctionne avec un mélange stoechiométrique. Ces conditions de référence permettent un recalage par un gain sur le signal instantané du capteur. Pour une sonde à oxygène de type "tout-ou-rien", il suffit de garantir un mélange suffisamment riche en carburant.

Dans ces conditions de fonctionnement du moteur choisies pour détecter soit le minimum soit le maximum du signal de sortie $V_{out}$ du capteur de gaz, la moyenne du signal doit être extraite et validée par un test sur l'écart-type par exemple.

Après l'acquisition de ces deux valeurs minimale $V_{min}$ et maximale $V_{max}$, le procédé compare chacune d'elles à un seuil, respectivement $SV_{min}$ et $SV_{max}$, définis par calibration de l'une ou l'autre de ces deux valeurs lors de la mise au point, pour en déduire une panne dans les cas de dépassement.

Une étape de signalement d'une panne de capteur peut ainsi être effectuée si l'une des deux valeurs mesurées minimale ($V_{min}$) et maximale ($V_{max}$) du signal de sortie ($V_{out}$) du capteur de gaz est supérieure respectivement au seuil ($SV_{min}$) ou au seuil ($SV_{max}$).

Le procédé de contrôle comporte ensuite une phase d'adaptation du signal de sortie du capteur de gaz aux modes de dégradation.

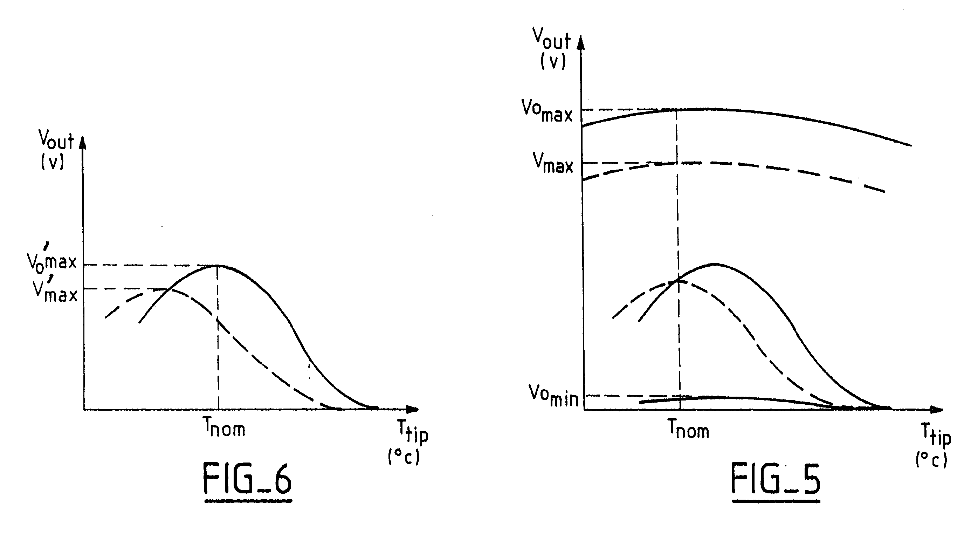

Selon une première stratégie, le procédé de contrôle adapte la caractéristique statique du capteur de gaz aux évolutions représentées par exemple sur la figure 5 représentant le signal de sortie $V_{out}$ en fonction de la température moyenne $T_{tip}$, c'est-à-dire corrige la valeur mesurée du signal de sortie $V_{out}$, par exemple par calibration à partir d'une loi de correction préétablie et des valeurs minimales $V_{min}$ et/ou maximale $V_{max}$ obtenues pour des points de fonctionnement moteur parfaitement maîtrisés correspondant respectivement à la coupure de l'injection de carburant et à un mélange stoechiométrique, voire la pleine charge. Cette valeur du signal de sortie ainsi corrigée sera délivrée à un calculateur de contrôle moteur.

Ainsi, étant donné les valeurs minimale $V_{0min}$ et maximale $V_{0max}$ du signal de sortie $V_{out}$ d'un capteur de gaz à l'état neuf, on peut définir le gain de ce capteur en mode d'utilisation, dont les valeurs minimale et maximale sont référencées respectivement par $V_{min}$ et $V_{max}$ :

$$G = (V_{0max} - V_{0min})/(V_{max} - V_{min})$$

et son offset :

$$O_f = V_{0min} - (G * V_{min}).$$

A chaque échantillon mesuré à l'instant, le signal de sortie $V_{out}(t)$ du capteur de gaz est redressé pour devenir :

$$V_{adap}(t) = [G*V_{out}(t)]+O_f.$$

Cette adaptation peut se faire jusqu'à des seuils de gain et d'offset au-delà desquels le capteur de gaz est déclaré en panne, afin d'éviter le risque de dispersion si le gain est trop faible ou de décalage par rapport à la fenêtre de mesure si l'offset est trop important.

Selon une autre stratégie, le procédé de contrôle adapte le dispositif de maintien en température, soit la puissance de chauffage du capteur, à la dégradation du capteur de gaz, afin de garantir des conditions de mesure du signal de sortie $V_{out}$ correspondant à la sensibilité minimale à la température.

Deux cas sont possibles pour agir sur la commande de chauffage. Dans un premier cas, si le décalage de la température nominale $T_{nom}$ du capteur (figure 6) est correlé au signal de sortie $V_{out}$ délivré par celui-ci, dans des conditions de fonctionnement données, on décale la puissance de chauffage d'une valeur cartographiée en fonction du décalage lu entre la valeur maximale $V'_{max}$ mesurée et la valeur maximale $V'_{0max}$ du capteur à l'état neuf. Par exemple, sur un capteur d'hydrocarbures HC de type potentiométrique, ce décalage est correlé avec la tension $V_{out}$ délivrée en sortie du capteur pour une composition gazeuse de type mélange stoechiométrique.

Dans un deuxième cas, correspondant à la fois à une évolution du gain du signal $V_{out}$ de sortie du capteur de gaz et à un décalage de la température nominale $T_{nom}$ comme cela est représenté par les courbes $C'_1$, $C'_2$ et $C'_3$ de la figure 2, le procédé comprend une étape de correction de la puissance de chauffage pour que le capteur fonctionne à sa température nominale $T_{nom}$, suivie d'une étape de correction du gain du signal $V_{out}$ en fonction de la température $T_{tip}$ du capteur par une valeur calibrée en fonction du décalage mesuré pour un fonctionnement du moteur à la richesse 1.

Pour ramener la température $T_{tip}$ du capteur à la valeur nominale $T_{nom}$ pour laquelle la sensibilité à la température est minimale, la stratégie consiste à tester la sensibilité en température du capteur dans des conditions de fonctionnement du moteur déterminées, à la demande par exemple du calculateur électronique de contrôle moteur.

Ces conditions d'adaptation correspondent à un fonctionnement du moteur tel que la teneur en espèce chimique à mesurer rend le signal de sortie du capteur $V_{out}$ potentiellement sensible à la température (courbe $C_2$ de la figure 2). Ces conditions portent d'une part sur la température d'eau qui doit être supérieure à un seuil déterminé signifiant que le moteur est sorti de la phase de démarrage et est chaud, et d'autre part, sur la richesse du mélange air-carburant qui doit être inférieure à un seuil défini signifiant que le capteur de gaz est hors phase de saturation.

Le test de la sensibilité du signal de sortie $V_{out}$ en fonction de la température $T_{tip}$ du capteur, pour rechercher le maximum du signal, est réalisé par modulation de la température de chauffage et évaluation de la réponse du signal $V_{out}$ pour déterminer la pente locale de la courbe caractéristique. Comme le montre la figure $7_a$, un exemple de modulation dans le temps de la puissance de chauffage $P_{ch}$, en Watts, peut être une suite de créneaux réalisant une commande périodique, autour d'une puissance $P_{nom}$ nominale, qui aboutit à une réponse dans le temps du signal de sortie $V_{out}$, elle-même périodique, comme le montre la courbe $C_4$ de la figure $7_b$. La puissance de chauffage nominale est celle pour laquelle la sensibilité du signal de sortie $V_{out}$ est minimale en fonction de la température, c'est-à-dire que le signal varie peu autour de la valeur maximale $V'_{max}$ (courbe $C_5$ en pointillés).

Ainsi, le procédé de contrôle selon l'invention permet d'optimiser le fonctionnement d'un capteur de gaz de type potentiométrique dans le but de garantir une information sur les concentrations en espèces chimiques à mesurer qui soit fiable et de détecter les dégradations de son fonctionnement pour en assurer un mode de fonctionnement dégradé.

L'invention non seulement surveille les variations de la caractéristique signal de sortie en fonction de la température moyenne de la cellule de mesure d'un capteur de gaz potentiomémtrique, mais également propose un recalage du signal maximal.

**Revendications**

1. Procédé de contrôle d'un capteur de gaz d'échappement d'un véhicule automobile, le capteur étant de type potentiométrique délivrant une tension électrique caractéristique de la concentration de l'espèce chimique à mesurer et comprenant au moins une cellule de mesure constituée de deux électrodes et d'un électrolyte, le procédé comportant une phase de surveillance du signal de sortie (Vout) du capteur de gaz et consistant à comparer une température nominale (Tnom) et une valeur du signal de sortie (Vout), pour laquelle la sensibilité est minimale, par rapport à des seuils respectifs définis pour un capteur à l'état neuf, afin de constater un mode de dégradation du capteur, procédé comprenant les étapes suivantes :

- la cellule de mesure est associée à un élément de chauffage piloté électroniquement,
- ladite phase de surveillance est réalisée dans des conditions de fonctionnement du moteur telles que la sensibilité dudit signal de sortie avec la température (Ttip) de la cellule de mesure est minimale,
- le procédé comporte une étape de test de la sensibilité en température du capteur de gaz, dans des conditions de fonctionnement du moteur telles que le signal de sortie du capteur soit potentiellement sensible à la température, correspondant d'une part à un fonctionnement du moteur à chaud, hors phase de démarrage, et d'autre part à un fonctionnement du capteur hors saturation, réalisée par modulation de la température de chauffage et évaluation de la réponse du signal de sortie (Vout).

**2.** Procédé de contrôle selon la revendication 1, **caractérisé en ce que** la phase de surveillance du signal de sortie (Vout) du capteur de gaz est effectuée dans des conditions de fonctionnement du moteur telles qu'elles engendrent un niveau minimal (Vmin) du signal de sortie, correspondant à l'absence de l'espèce chimique à mesurer, et **en ce que** la moyenne du signal est calculée et validée par un test sur l'écart-type.

**3.** Procédé de contrôle selon la revendication 1, **caractérisé en ce que** la phase de surveillance du signal de sortie (Vout) du capteur de gaz est effectuée dans des conditions de fonctionnement du moteur telles qu'elles engendrent un niveau maximal ($V_{max}$) du signal de sortie, correspondant à un excès de l'espèce chimique à mesurer ou d'un autre élément auquel est sensible le capteur, et **en ce que** la moyenne du signal est calculée et validée par un test sur l'écart-type.

**4.** Procédé de contrôle selon l'une des revendications 1, 2 ou 3, **caractérisé en ce qu'**il comporte de plus une phase d'adaptation du signal de sortie du capteur de gaz aux modes de dégradation consistant à adapter la caractéristique statique du capteur au mode de dégradation constaté, par correction de la valeur mesurée du signal de sortie par calibration à partir d'une loi de correction préétablie et des valeurs minimale (Vmin) ou maximale (Vmax) du signal de sortie obtenues correspondant à une sensibilité minimale du signal en température.

**5.** Procédé de contrôle selon l'une des revendications 1 ou 3, **caractérisé en ce qu'**il comporte de plus une phase d'adaptation de la puissance de chauffage délivrée par l'élément de chauffage au capteur de gaz, consistant, dans le cas où le décalage de la température nominale (Tnom) du capteur est corrélé à la tension de sortie (Vout) dans des conditions de fonctionnement données, à décaler la puissance de chauffage d'une valeur cartographiée en fonction du décalage lu entre la valeur maximale $(V'max)$ mesurée et la valeur maximale $(V'_{0\,max})$ du capteur à l'état neuf.

**6.** Procédé de contrôle selon l'une des revendications 1, 2 ou 3, **caractérisé en ce qu'**il comporte de plus, dans le cas d'une évolution du gain du signal de sortie (Vout) du capteur de gaz et d'un décalage de la température nominale (Tnom), une étape de correction de la puissance de chauffage pour que le capteur fonctionne à sa température nominale et une étape de correction du gain du signal (Vout) en fonction de la température (Ttip) du capteur par une valeur calibrée en fonction du décalage mesuré pour un fonctionnement du moteur avec un mélange stoechiométrique.

**7.** Procédé de contrôle selon la revendication 1, **caractérisé en ce qu'**il comporte une étape de signalement d'une panne de capteur si l'une des deux valeurs mesurées minimale (Vmin) et maximale (Vmax) du signal de sortie (Vout) du capteur de gaz est supérieure à un seuil respectif (SVmin, SVmax).

**Claims**

**1.** Method for controlling an exhaust gas sensor of a motor vehicle, the sensor being of the potentiometer type delivering an electric voltage characteristic of the concentration of the chemical species to be measured and comprising at least one measurement cell consisting of two electrodes and an electrolyte, the method comprising a phase for monitoring the output signal (Vout) from the gas sensor and consisting in comparing a nominal temperature (Tnom) and a value of the output signal (Vout), for which the sensitivity is minimal, compared to respective thresholds defined for a sensor in the new state, in order to confirm a degradation mode of the sensor, the method comprising the following steps:

- the measurement cell is associated with an electronically-driven heating element,
- said monitoring phase is performed in engine operating conditions such that the sensitivity of said output signal to the temperature (Ttip) of the measurement cell is minimal,
- the method comprises a step of testing the temperature sensitivity of the gas sensor, in engine operating conditions such that the output signal from the sensor is potentially sensitive to the temperature, corresponding on the one hand to operation of the engine when hot, outside of the starting phase, and on the other hand to operation of the sensor without saturation, performed by modulating the heating temperature and evaluating the response of the output signal (Vout).

2. Control method according to Claim 1, **characterized in that** the phase for monitoring the output signal (Vout) from the gas sensor is performed in engine operating conditions such that they generate a minimum level (Vmin) of the output signal, corresponding to the absence of the chemical species to be measured, and **in that** the average of the signal is calculated and validated by a standard deviation test.

3. Control method according to Claim 1, **characterized in that** the phase for monitoring the output signal (Vout) from the gas sensor is performed in engine operating conditions such that they generate a maximum level (Vmax) of the output signal, corresponding to an excess of the chemical species to be measured or of another element to which the sensor is sensitive, and **in that** the average of the signal is calculated and validated by a standard deviation test.

4. Control method according to one of Claims 1, 2 or 3, **characterized in that** it also comprises a phase for adapting the output signal from the gas sensor to the degradation modes consisting in adapting the static characteristic of the sensor to the observed degradation mode, by correcting the measured value of the output signal by calibration based on a preestablished correction law and minimum (Vmin) or maximum (Vmax) values of the output signal obtained, corresponding to a minimum temperature sensitivity of the signal.

5. Control method according to either of Claims 1 and 3, **characterized in that** it also comprises a phase for adapting the heating power delivered by the heating element to the gas sensor, consisting, in the case where the offset of the nominal temperature (Tnom) of the sensor is correlated to the output voltage (Vout) in given operating conditions, in offsetting the heating power by a value mapped according to the offset read between the measured maximum value (Vmax) and the maximum value ($V_{0\,max}'$) of the sensor in the new state.

6. Control method according to one of Claims 1, 2 or 3, **characterized in that** it also comprises, in the case of a trend in the gain of the output signal (Vout) from the gas sensor and an offset of the nominal temperature (Tnom), a phase for correcting the heating power so that the sensor operates at its nominal temperature and a phase for correcting the gain of the signal (Vout) according to the temperature (Ttip) of the sensor by a calibrated value according to the measured offset for operation of the engine with a stoichiometric mixture.

7. Control method according to Claim 1, **characterized in that** it comprises a step for signalling a sensor failure if one of the two minimum (Vmin) and maximum (Vmax) measured values of the output signal (Vout) from the gas sensor is greater than a respective threshold (SVmin, SVmax).

**Patentansprüche**

1. Verfahren zur Kontrolle eines Abgassensors eines Kraftfahrzeugs, wobei der Sensor vom Typ Potentiometer ist, der eine für die zu messende Konzentration der chemischen Spezies charakteristische elektrische Spannung liefert, und mindestens eine Messzelle enthält, die aus zwei Elektroden und einem Elektrolyt besteht, wobei das Verfahren eine Phase der Überwachung des Ausgangssignals (Vout) des Gassensors aufweist, die darin besteht, eine Nenntemperatur (Tnom) und einen Wert des Ausgangssignals (Vout), bei dem die Empfindlichkeit minimal ist, bezüglich von jeweiligen Schwellwerten zu vergleichen, die für einen Sensor im Neuzustand definiert sind, um eine Verschlechterungsart des Sensors festzustellen, wobei das Verfahren die folgenden Schritte enthält:

- die Messzelle ist einem elektrisch gesteuerten Heizelement zugeordnet,
- die Überwachungsphase wird unter derartigen Betriebsbedingungen des Motors durchgeführt, dass die Empfindlichkeit des Ausgangssignals für die Temperatur (Ttip) der Messzelle minimal ist,

- das Verfahren enthält einen Testschritt der Temperaturempfindlichkeit des Gassensors unter derartigen Betriebsbedingungen des Motors, dass das Ausgangssignal des Sensors potentiell auf die Temperatur entsprechend einerseits einem Warmbetrieb des Motors außerhalb der Startphase und andererseits einem Betrieb des Sensors außerhalb der Sättigung anspricht, der durch Modulation der Heiztemperatur und Bewertung der Antwort des Ausgangssignals (Vout) durchgeführt wird.

2. Kontrollverfahren nach Anspruch 1, **dadurch gekennzeichnet, dass** die Überwachungsphase des Ausgangssignals (Vout) des Gassensors unter derartigen Betriebsbedingungen des Motors durchgeführt wird, dass sie einen minimalen Pegel (Vmin) des Ausgangssignals erzeugen, entsprechend der Abwesenheit der zu messenden chemischen Spezies, und dass der Mittelwert des Signals durch einen Test an der Standardabweichung berechnet und validiert wird.

3. Kontrollverfahren nach Anspruch 1, **dadurch gekennzeichnet, dass** die Überwachungsphase des Ausgangssignals (Vout) des Gassensors unter derartigen Betriebsbedingungen des Motors durchgeführt wird, dass sie einen maximalen Pegel (Vmax) des Ausgangssignals erzeugen, entsprechend einem Übermaß der zu messenden chemischen Spezies oder eines anderen Elements, auf das der Sensor anspricht, und dass der Mittelwert des Signals durch einen Test an der Standardabweichung berechnet und validiert wird.

4. Kontrollverfahren nach einem der Ansprüche 1, 2 oder 3, **dadurch gekennzeichnet, dass** es außerdem eine Anpassungsphase des Ausgangssignals des Gassensors an die Verschlechterungsarten enthält, die darin besteht, die statische Charakteristik des Sensors an die festgestellte Verschlechterungsart anzupassen, durch Korrektur des gemessenen Werts des Ausgangssignals durch Kalibrierung ausgehend von einem vorab erstellten Korrekturgesetz und vom erhaltenen minimalen (Vmin) oder maximalen Wert (Vmax) des Ausgangssignals entsprechend einer minimalen Temperaturempfindlichkeit des Signals.

5. Kontrollverfahren nach einem der Ansprüche 1 oder 3, **dadurch gekennzeichnet, dass** es außerdem eine Anpassungsphase der vom Heizelement an den Gassensor gelieferten Heizleistung aufweist, die in dem Fall, in dem die Verschiebung der Nenntemperatur (Tnom) des Sensors mit der Ausgangsspannung (Vout) unter gegebenen Betriebsbedingungen korreliert ist, darin besteht, die Heizleistung um einen kartierten Wert abhängig von der abgelesenen Verschiebung zwischen dem maximalen gemessenen Wert (V'max) und dem maximalen Wert $(V_0' max)$ des Sensors im Neuzustand zu verschieben.

6. Kontrollverfahren nach einem der Ansprüche 1, 2 oder 3, **dadurch gekennzeichnet, dass** es außerdem im Fall einer Entwicklung der Verstärkung des Ausgangssignals (Vout) des Gassensors und einer Verschiebung der Nenntemperatur (Tnom) einen Schritt der Korrektur der Heizleistung, damit der Sensor auf seiner Nenntemperatur arbeitet, und einen Schritt der Korrektur der Verstärkung des Signals (Vout) abhängig von der Temperatur (Ttip) des Sensors durch einen kalibrierten Wert abhängig von der gemessenen Verschiebung für einen Betrieb des Motors mit einem stöchiometrischen Gemisch aufweist.

7. Kontrollverfahren nach Anspruch 1, **dadurch gekennzeichnet, dass** es einen Schritt der Anzeige eines Sensorausfalls aufweist, wenn einer der zwei gemessenen Werte, der minimale (Vmin) oder der maximale (Vmax), des Ausgangssignals (Vout) des Gassensors höher als ein jeweiliger Schwellwert (SVmin, SVmax) ist.

# FIG_1

# FIG_2

EP 1 119 765 B1

Vbat
Teau
Qgaz

COMMANDE
DE
CHAUFFAGE

7

Ich

Vch

6

FIG_3a

Rc

CONTRÔLEUR

9

Ich

Vch

6

Riv

ESTIMATEUR

8

Is

Vs

Riv

Es

1

FIG_3b

Riv
(Ω)

Rc

Tnom

Ttip
(°C)

FIG_4

FIG_6

FIG_5

EP 1 119 765 B1

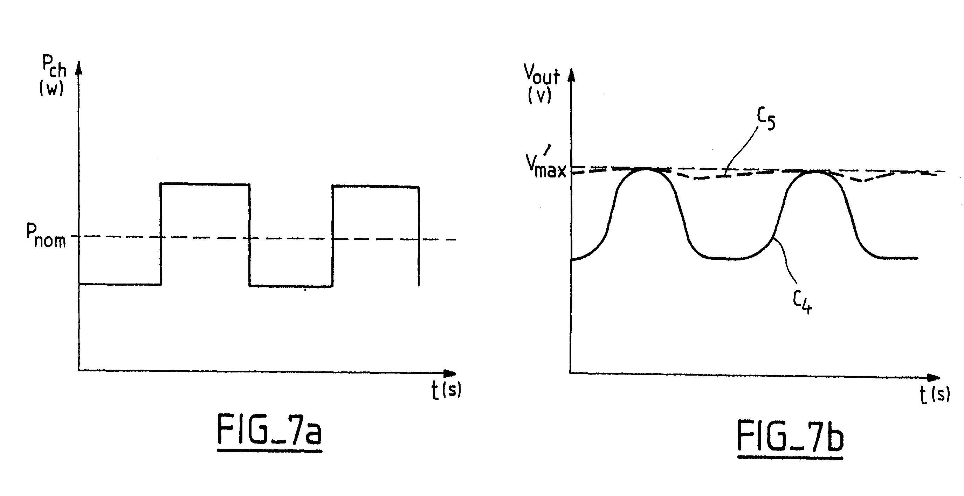

FIG_7a

FIG_7b

**EP 1 119 765 B1**

## RÉFÉRENCES CITÉES DANS LA DESCRIPTION

**Documents brevets cités dans la description**

- DE 19729350
- US 5182907 A